# EUROPÄISCHE PATENTSCHRIFT

(11) **EP 2 412 757 B1**
(45) Veröffentlichungstag und Bekanntmachung des Hinweises auf die Patenterteilung: **13.11.2013**
(21) Anmeldenummer: 10007993.8
(22) Anmeldetag: 30.07.2010
(51) Int. Cl.: C08L 77/00, C08L 77/06, C08L 51/00, C08J 5/04, C08J 5/10, C08L 53/02

(54) **Polyamidformmasse zur Herstellung von Formkörpern mit einer Weichgriffoberfläche sowie entsprechende Formkörper**
Polyamide moulding composition for producing moulded articles with a soft touch surface and corresponding articles
Composition de moulage à base de polyamide pour la fabrication de corps moulés ayant une surface de prise souple et corps moulés correspondants

(43) Veröffentlichungstag der Anmeldung: 01.02.2012
(73) Patentinhaber: EMS-PATENT AG, 7013 Domat / Ems (CH)
(72) Erfinder: Stöppelmann, Georg, Dr.rer.nat., 7402 Bonaduz (CH); Hoffmann, Botho, Dr.rer.nat., 7013 Domat/ Ems (CH)
(74) Vertreter: Reitzle, Helmut

(56) Entgegenhaltungen:
- EP-B1- 0 771 846
- WO-A1-2004/078848
- US-A- 5 278 231
- LAURA D M ET AL: "Effect of rubber particle size and rubber type on the mechanical properties of glass fiber reinforced, rubber-toughened nylon 6", POLYMER, ELSEVIER SCIENCE PUBLISHERS B.V, GB, Bd. 44, Nr. 11, 1. Mai 2003 (2003-05-01), Seiten 3347-3361, XP004423207, ISSN: 0032-3861, DOI: DOI:10.1016/S0032-3861(03)00221-0

## Beschreibung

Die Erfindung betrifft eine Polyamidformmasse zur Herstellung von Formkörpern mit einer Weichgriffoberfläche, wobei die Polyamidformmasse ein Blend aus einem aminterminierten, amorphen Polyamid und Styrol-Ethylen/Butylen-Styrol-Copolymer sowie mit Maleinsäureanhydrid gepfropftes Styrol-Ethylen/Butylen-Styrol-Copolymer enthält. Die Erfindung betrifft weiterhin Formkörper, die mit dieser Formmasse hergestellt werden und deren Verwendung.

Geformte Artikel, die eine Weichstoffoberfläche, einen sog. Soft Touch, aufweisen, sind im Stand der Technik bekannt. Aus der EP 0 771 846 B1 ist eine Weichgriffschicht-Blockcopolymerzusammensetzung bekannt, die aus einem Thermoplasten und Blockcopolymeren gebildet ist. Bei den Blockcopolymeren wird eine Mischung aus Styrol-Ethylen/Butylen-Styrol-Copolymer (SEBS) und ein mit Maleinsäureanhydrid gepfropftes SEBS (SEBS-MAH) vorgeschlagen. Als Thermoplast wird u.a. Polyamid 6 und Polyamid 66 erwähnt. Die in der vorstehend genannten europäischen Patentschrift genannten Zusammensetzungen werden dazu verwendet, sog. Mehrschichtformkörper herzustellen. Bei dem Mehrschichtformkörper nach der EP 0 771 846 B1 wird die vorstehend beschriebene Blockcopolymerzusammensetzung als Soft-Touch-Schicht auf einen harten und starren thermoplastischen Grundkörper aufgebracht.

Ein weiterer Formkörper, der eine Weichgriffoberfläche aufweisen soll, ist in der EP 1 474 459 B1 beschrieben. Die dort beschriebenen Formkörper bestehen aus hydriertem Blockcopolymer mit definiert eingestellter kontrollierter Verteilung. In der EP 1 474 459 B1 wird darauf hingewiesen, dass eine derartige Blockcopolymerzusammensetzung besonders gute Haftung zu einem harten Grundkörper z.B. aus Polyamid aufweist.

Die vorstehend beschriebenen Dokumente beschreiben nun zwar eine Blockcopolymerzusammensetzung, die zu einer sog. Soft-Touch-Oberfläche, d.h. einer Weichgriffoberfläche, führt, jedoch sind die Polymerzusammensetzungen nicht geeignet, Formkörper alleine zu realisieren, die neben der Soft-Touch-Oberfläche auch noch ausgezeichnete physikalische Eigenschaften, insbesondere einen hohen Zug-E-Modul aufweisen.

Ausgehend hiervon ist es auch die Aufgabe der vorliegenden Erfindung, eine neue Polyamidformmasse anzugeben, die zur Herstellung von Formkörpern mit einer Weichgriffoberfläche dient. Die Formkörper sollen dabei neben einem hohen Zug-E-Modul gleichzeitig auch eine gute Reißdehnung aufweisen. Aufgabe der vorliegenden Erfindung ist es weiterhin, entsprechende Formkörper bereitzustellen.

Die Aufgabe wird durch die kennzeichnenden Merkmale des Patentanspruchs 1 in Bezug auf die Polyamidformmasse und durch die Merkmale des Anspruchs 12 in Bezug auf die Formkörper gelöst.

Erfindungsgemäß zeichnet sich somit die Formmasse zur Herstellung von Formkörpern mit einer Weichgriffoberfläche dadurch aus, dass die Formmasse als Polyamid ein aminterminiertes, amorphes Polyamid enthält und als Weichmacher mindestens ein Styrolblockcopolymer enthalten ist. Der Weichmacher setzt sich zusammen aus mindestens einem Styrol-Ethylen/Butylen-Styrol-Copolymer (SEBS) und mindestens einem mit Maleinsäureanhydrid (MAH) gepfropften SEBS. Die erfindungsgemäße Formmasse enthält weiterhin noch Verstärkungsstoffe sowie Additive.

Wesentliches Element der Erfindung ist dabei, dass ein aminterminiertes, amorphes Polyamid eingesetzt wird und dass ein bestimmtes vorgegebenes Gewichtsverhältnis von Polyamid zu Weichmacher im Bereich von 1,25:0,75 bis 0,75:1,25 eingehalten wird.

Sofern diese Bedingungen erfüllt sind, d.h. dass ein aminterminiertes, amorphes Polyamid und die vorstehend genannte spezifische Weichmachermischung eingesetzt wird, kann mit den weiteren Formulierungsbestandteilen, nämlich mit den Verstärkungsstoffen und den Additiven, ein Formkörper erhalten werden, der nicht nur eine ausgezeichnete Weichgriffoberfläche im Bezug auf die Haptik und die optischen Eigenschaften aufweist, sondern dass dieser Formkörper gleichzeitig auch noch überdurchschnittlich gute Ergebnisse in Bezug auf den Zug-E-Modul und die Reißdehnung aufweist.

Es hat sich gezeigt, dass es bei der erfindungsgemäßen Polyamidformmasse besonders bevorzugt ist, wenn als aminterminiertes, amorphes Polyamid ein PA 6I/6T, PA 6I/10T, PA MACM14, PA MACM18 und Mischungen oder Copolyamide davon eingesetzt wird. Aminterminiert bedeutet, dass das amorphe Polyamid einen Überschuss an Aminoendgruppen aufweist.

Die relative Viskosität des aminterminierten, amorphen Polyamids beträgt 1,35 bis 1,95, bevorzugt 1,37 bis 1,80, besonders bevorzugt 1,37 bis 1,70, ganz besonders bevorzugt 1,40 bis 1,55, gemessen in 0,5 Gew.-%-iger m-Kresollösung bei 20 °C.

Bevorzugt weist das aminterminierte, amorphe Polyamid einen Gehalt an Aminoendgruppen von mindestens 150 meq/kg, ganz besonders bevorzugt von 160 bis 300 meq/kg, noch mehr bevorzugt von 180 bis 260 meq/kg auf.

Der Anteil der Isophthalsäure im Polyamid PA 6I/6T beträgt 90 bis 57 Mol-%, bevorzugt 85 bis 60, besonders bevorzugt 75 bis 60 Mol-%, ganz besonders bevorzugt 72 bis 63 Mol-%, wobei die Summe der beiden Dicarbonsäuren 100 Mol-% ergibt.

Der Anteil der Isophthalsäure im Polyamid PA 6I/10T beträgt mindestens 50 Mol-%, bevorzugt 55 bis 85, besonders bevorzugt 60 bis 80 Mol-%, wobei die Summe der beiden Dicarbonsäuren 100 Mol-% ergibt.

In einer weiteren alternativen Ausführungsform der erfindungsgemäßen Polyamidformmasse wird das amorphe Polyamid in Mischung mit mindestens einem teilkristallinen Polyamid eingesetzt. Das mindestens eine teilkristalline Polyamid wird ausgewählt aus der Gruppe bestehend aus PA 6, PA 66, PA 69, PA 610, PA 612, PA 1010 und PA 66/6. Der Anteil des teilkristallinen Polyamides an der Mischung von amorphem Polyamid und teilkristallinem Polyamid beträgt maximal 30 Gew.-%, bevorzugt 5 bis 20 Gew.-%, besonders bevorzugt 10 bis 15 Gew.-%.

Die relative Viskosität des teilkristallinen Polyamids beträgt 1,4 bis 2,5, bevorzugt 1,45 bis 2,2, besonders bevorzugt 1,5 bis 1,9, ganz besonders bevorzugt 1,5 bis 1,8, gemessen in 0,5 Gew.-%-iger m-Kresollösung bei 20 °C.

Bevorzugt weist das teilkristalline Polyamid einen Gehalt an Aminoendgruppen von mindestens 40 meq/kg, besonders bevorzugt von mindestens 45 meq/kg, ganz besonders bevorzugt von 50 bis 90 meq/kg auf.

Insbesondere eine Polyamidformmasse, die ein derartiges, wie vorstehend beschriebenes amorphes Polyamid enthält, hat sich in seiner Kombination der Eigenschaften als überlegen herausgestellt. Überraschend ist insbesondere, dass Formkörper, die aus der erfindungsgemäßen Polyamidformmasse hergestellt werden, neben einem Zug-E-Modul größer als 2500 MPa gleichzeitig auch eine sehr hohe Reißdehnung von größer 6 % aufweisen.

Bevorzugte Gewichtsverhältnisse von Polyamid zu Weichmacher betragen 1,2:0,80 bis 0,80:1,25, besonders bevorzugt 1,15:0,85 bis 0,85:1,15 und ganz besonders bevorzugt ist das Gewichtsverhältnis von 1:1.

Es wurde weiter gefunden, dass es bei den Weichmachern selbst besonders wichtig ist, wenn ein Gewichtsverhältnis von SEBS zu SEBS-MAH von 1:2 bis 2:1, bevorzugt 1:1,5 bis 1,5:1, besonders bevorzugt 1:1,2 bis 1,2:1 und ganz besonders bevorzugt 1:1 vorteilhaft. Durch die Einhaltung dieser Grenzen können besonders gute Ergebnisse in Bezug auf die Haptik der Oberfläche erreicht werden.

Das Styrol-Ethylen/Butylen-Styrol-Copolymer (SEBS) und das mit Maleinsäureanhydrid (MAH) gepfropfte Styrol-Ethylen/Butylen-Styrol-Copolymer (SEBS-MAH) enthalten jeweils 25 bis 35 Gew.-% Styrol.

Das SEBS-MAH weist eine Schmelze-Volumenfließrate (MVR)bei 275 °C und einer Belastung von 5 kg von mindestens 80 ml/10 min, bevorzugt 90 bis 200 ml/10 min, besonders bevorzugt 100 bis 160 ml/10 min auf. Der Gehalt an Maleinsäureanhydrid im SEBS-MAH beträgt 1 bis 2,2 Gew.-%, bevorzugt 1,3 bis 2,0 Gew.-%, besonders bevorzugt 1,5 bis 1,9 Gew.-%.

Als günstig hat sich herausgestellt, wenn in der erfindungsgemäßen Polyamidformmasse das Blend aus mindestens einem Polyamid (PA) mit mindestens einem Styrolblockcopolymer in einer Menge von 55 bis 85 Gew.-%, bevorzugt 60 bis 80 Gew.-%, besonders bevorzugt 65 bis 75 Gew.-% enthalten ist.

Als weiterhin günstig hat sich herausgestellt, wenn der Verstärkungsstoff in einer Menge von 15 bis 45 Gew.-%, bevorzugt 20 bis 40 Gew.-%, besonders bevorzugt 25 bis 35 Gew.-% und ganz besonders bevorzugt in einer Menge von 30 Gew.-% enthalten ist. In Bezug auf die Verstärkungsstoffe ist besonders hervorzuheben, dass sich hier Glasfasern als am besten erwiesen haben.

Es können Kurzglasfasern (Schnittglas) oder Endlosglasfasern (Roving) verwendet werden. Bei der Kurzglasfaser beträgt die Länge der Faser 0,2 bis 20 mm, bevorzugt 2 bis 12 mm. Die Glasfasern können mit einem geeigneten Schlichte- oder Haftvermittlersystem ausgerüstet sein.

Es können Glasfasern aus allen Glassorten, wie z.B. A-, C-, D-, E-, M-, S-, R-Glas, oder beliebige Mischungen davon eingesetzt werden. Bevorzugt sind Glasfasern aus E-Glas oder Glasfasern aus Mischungen mit E-Glas oder Mischungen mit E-Glasfasern.

Die Glasfasern weisen einen Querschnitt auf, der rund, oval, elliptisch, eckig oder rechteckig ist. Glasfasern mit nichtkreisförmigem Querschnitt, d.h. mit ovalem, elliptischem, eckigem oder rechteckigem Querschnitt, werden auch als flache Glasfasern bezeichnet.

Das Erscheinungsbild der Glasfaser kann gestreckt oder spiralförmig sein.

Die Glasfasern weisen einen Durchmesser von 5 bis 20 µm, bevorzugt von 5 bis 15 µm und besonders bevorzugt von 5 bis 10 µm auf.

Bei flachen Glasfasern beträgt das Aspektverhältnis, d.h. das Verhältnis der Hauptquerschnittsachse zur Nebenquerschnittsachse 1,5 bis 8, bevorzugt 2 bis 6, besonders bevorzugt 3 bis 5.

Die Querschnittsachsen der flachen Glasfasern sind 3 bis 40 µm lang. Bevorzugt beträgt die Länge der Nebenquerschnittsachse 3 bis 20 µm, besonders bevorzugt 4 bis 10 µm und die Länge der Hauptquerschnittsachse 6 bis 40 µm, besonders bevorzugt 12 bis 30 µm.

Die erfindungsgemäße Polyamidformmasse enthält ferner 0,1 bis 10 Gew.-%, bevorzugt 0,1 bis 5 Gew.-%, ganz besonders bevorzugt 0,1 bis 3 Gew.-% eines Additivs.

Die Additive können den erfindungsgemäßen Polyamidformmassen als Pulver bzw. Flüssigkeit oder als Masterbatch zugegeben werden. Vorzugsweise in Form von einem oder mehreren Masterbatches. Der Träger des Masterbatches ist dabei ausgewählt aus einer Gruppe bestehend aus Polyamid, Polyolefin, funktionalisiertem Polyolefin, Ionomer.

Bei den Additiven können an und für sich alle aus dem Stand der Technik bekannten Additive zur Herstellung von Polyamidformmassen enthalten sein. Bevorzugt ist das Additiv ausgewählt aus der Gruppe bestehend aus anorganischen Stabilisatoren, organischen Stabilisatoren, Gleitmitteln, Farbstoffen, Markierungsstoffen, anorganischen Pigmenten, organischen Pigmenten, IR-Absorbern, Antistatika, Antiblockmitteln, Nukleierungsmitteln, Kristallisationsbeschleunigern, Kristallisationsverzögerern, Kondensationskatalysatoren, Kettenreglern, Entschäumern, kettenverlängernden Additiven, Leitfähigkeitsadditiven, Ruß, Graphit, Kohlenstoffnanoröhrchen, Entformungsmitteln, Trennmitteln, optischen Aufhellern, Haftvermittlern, metallischen Pigmenten, Metallflittern, metallbeschichteten Partikeln, teilchenförmigen Füllstoffen, insbesondere nanoskaligen Füllstoffen, wie z.B. Mineralen mit einer Partikelgröße von maximal 100 nm oder unmodifizierten oder modifizierten, natürlichen oder synthetischen Phyllosilikaten oder Mischungen davon.

Als Stabilisatoren bzw. Alterungsschutzmittel können in den erfindungsgemäßen Blends z.B. Antioxidantien, Antiozonantien, Lichtschutzmittel, UV-Stabilisatoren, UV-Absorber oder UV-Blocker eingesetzt werden.

Bevorzugt sind die teilchenförmigen Füllstoffe ausgewählt aus der Gruppe bestehend aus Talk, Glimmer, Wollastonit, Kaolin, gemahlenem oder gefälltem Calciumcarbonat, Glaskugeln, synthetischen Schichtsilikaten, natürlichen Schichtsilikaten und Mischungen hiervon. Diese teilchenförmigen Füllstoffe sind bevorzugt oberflächenbehandelt.

Bei den Farbstoffen ist insbesondere als Farbstoff Ruß bevorzugt, ganz besonders bevorzugt ist Farbruß. Dadurch lassen sich schwarz eingefärbte Formkörper herstellen, die trotz der Einfärbung neben hervorragenden haptischen Eigenschaften auch einen ausgezeichneten Zug-E-Modul und eine hohe Reißdehnung aufweisen.

Die vorstehend beschriebenen Polyamidformmassen führen zu Formkörpern, die folgende Eigenschaften aufweisen:
- Soft-Touch
- hohe Oberflächenqualität
- hoher Zug-E-Modul und hohe Reißdehnung
- hohe Kerbschlagzähigkeit und/oder Schlagzähigkeit

Der Zug-E-Modul liegt bei den Prüfkörpern, die mit der erfindungsgemäßen Formmasse hergestellt werden, im Bereich von 2500 bis 7500 MPa, bevorzugt 2800 bis 6000 MPa, besonders bevorzugt 3100 bis 6000 MPa.

Die Erfindung umfasst weiterhin auch Formkörper, die mit einer wie vorstehend beschriebenen Formmasse hergestellt werden. Die Formkörper zeichnen sich insbesondere dadurch aus, dass sie alleine für sich gesehen eine sehr hohe Stabilität aufweisen und gleichzeitig im Bezug auf die Oberfläche eine Weichgriffoberfläche, d.h. eine Soft-Touch-Oberfläche und eine gute Oberflächenqualität besitzen, so dass ausgezeichnete optische und auch haptische Eigenschaften erreicht werden.

Eine Polyamidformmasse, wie sie vorstehend beschrieben wurde, ist dank ihrer hervorragenden mechanischen Eigenschaften sowohl als Monomaterial als auch als Oberflächenmaterial in einem Mehrschichtverbund verwendbar.

Aufgrund der ausgezeichneten physikalischen Eigenschaften, insbesondere des überlegenen Zug-E-Moduls, in Kombination mit der Reißdehnung eignet sich die erfindungsgemäße Formmasse zur Herstellung von Gehäusen, Tasten, Griffen und/oder Griffflächen für Handwerkzeuge, Haushaltsgeräte, Sportgeräte, Möbelbestandteile, elektrische bzw. elektronische Komponenten oder elektrische bzw. elektronische Geräte. Bei den Geräten handelt es sich insbesondere um tragbare elektrische bzw. elektronische Geräte, z.B. Pumpen, Handwerkzeuge, Gartengeräte, Lockenstäbe, Haartrockner, Haarschneidegeräte, Rasierapparate, Epiliergeräte, Messgeräte, Infrarotschlüssel, Mobiltelefone, Abspielgeräte, Laptops, Notebooks, Netbooks, Spielkonsolen, Personal Digital Assistants (PDA), Smartphones, Speichermedien (z.B. USB-Sticks) oder Kombinationen davon.

Insbesondere bevorzugt wird eine vorstehend beschriebene Polyamidformmasse als Gehäuse, Tasten, Griffe und/oder Griffflächen für tragbare Kommunikationsgeräte, Abspielgeräte, Speichermedien oder Kombinationen davon verwendet.

Zur Herstellung der erfindungsgemäßen Polyamidformmasse werden die Komponenten im schmelzeförmigen Zustand gemischt und in der Regel das Verstärkungsmaterial über eine gravimetrische Dosierwaage oder einen Sidefeeder in die Schmelze dosiert. Dies geschieht auf üblichen Compoundiermaschinen, wie z.B. ein- oder zweiwelligen Extrudern oder Schneckenknetern. Die Komponenten werden dabei einzelnen in den Einzug dosiert oder in Form eines Dryblends zugeführt. Der polymere Anteil und das Verstärkungsmaterial können aber auch gemeinsam in den Einzug dosiert werden.

Zur Dryblendherstellung werden die getrockneten Granulate und gegebenenfalls weitere Additive vermischt. Diese Mischung wird mittels eines Taumelmischers, Röhnradmischers oder Taumeltrockners 10 bis 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 230 °C bis 300 °C. Vor der Düse kann Vakuum angelegt oder atmosphärisch entgast werden. Die Schmelze wird in Strangform ausgetragen, im Wasserbad bei 10 bis 80 °C abgekühlt und anschließend granuliert. Das Granulat wird für 12 bis 24 Stunden bei 80 bis 120 °C unter Stickstoff oder im Vakuum auf einen Wassergehalt von unter 0,1 Gew.-% getrocknet. Zur Prüfung der Polyamidformmassen werden die folgenden Messvorschriften verwendet.

MVR (Schmelze-Volumenfließrate bzw. Melt Volume Rate):
ISO 1133
Granulat
Temperatur 275 °C
Belastung 5 kg

Zug-E-Modul:
ISO 527 mit einer Zuggeschwindigkeit von 1 mm/min
ISO-Zugstab, Norm: ISO/CD 3167, Typ A1, 170 x 20/10 x 4 mm, Temperatur 23 °C

Reißfestigkeit und Reißdehnung:
ISO 527 mit einer Zuggeschwindigkeit 5 mm/min bei verstärkten Materialien
ISO-Zugstab, Norm: ISO/CD 3167, Typ A1,
170 x 20/10 x 4 mm, Temperatur 23 °C

Schlagzähigkeit nach Charpy:
ISO 179/*eU
ISO-Prüfstab, Norm: ISO/CD 3167, Typ B1,
80 x 10 x 4 mm, Temperatur 23 °C
* 1 = nicht instrumentiert, 2 = instrumentiert

Kerbschlagzähigkeit nach Charpy:
ISO 179/*eA
ISO-Prüfstab, Norm: ISO/CD 3167, Typ B1,
80 x 10 x 4 mm, Temperatur 23 °C
* 1 = nicht instrumentiert, 2 = instrumentiert

Relative Viskosität
ISO 307
0,5 Gew.-%-ige m-Kresollösung
Temperatur 20 °C
Berechnung der relativen Viskosität (RV) nach RV = t/t₀ in Anlehnung an Abschnitt 11 der Norm.

### Endgruppenbestimmung

Für die Bestimmung der Aminoendgruppen wird das Polyamid in m-Kresol heiß gelöst und mit Isopropanol versetzt. Der Gehalt an Aminoendgruppen wird durch potentiometrische Titration mit Perchlorsäure ermittelt.

Für die Bestimmung der Carboxylendgruppen wird das Polyamid in Benzylalkohol heiß gelöst. Der Gehalt an Carboxylendgruppen wird durch potentiometrische Titration mit einer Tetra-n-butylammoniumhydroxidlösung ermittelt.

Die Prüfkörper wurden auf einer Spritzgussmaschine der Firma Arburg, Modell Allrounder 420 C 1000-250 hergestellt. Dabei wurden Zylindertemperaturen zwischen 265 und 280 °C verwendet. Die Formtemperatur betrug 80 °C.

Werden die Prüfkörper im trockenen Zustand verwendet, werden sie nach dem Spritzguss mindestens 48 h bei Raumtemperatur in trockener Umgebung, d.h. über Silicagel gelagert.

### Herstellungsbeispiel für die Polyamidformmassen

Die Formmassen wurden auf einem Zweiwellenextruder der Firma Werner & Pfleiderer Typ ZSK 25 hergestellt. Zur Dryblendherstellung wurden die getrockneten Granulate (Polyamid, SEBS, SEBS-MAH und gegebenenfalls Russ-Masterbatch) vermischt. Diese Mischung wurde mittels eines Taumelmischers 30 Minuten lang homogenisiert. Das Dryblend wurde über eine Waage in den Einzug dosiert. Die Glasfaser wurde über einen Sidefeeder 6 Gehäuseeinheiten vor der Düse in die Polymerschmelze gefördert.

Die Temperatur des ersten Gehäuses wurde auf 80 °C eingestellt, diejenige der restlichen Gehäuse aufsteigend von 230 bis 280 °C. Es wurde eine Drehzahl von 200 U/min und ein Durchsatz von 12 kg/h verwendet und atmosphärisch entgast. Die Stränge wurden im Wasserbad abgekühlt, geschnitten und das erhaltene Granulat bei 110 °C für 24 h auf einen Wassergehalt unter 0,1 Gew.-% getrocknet.

Die Erfindung wird nachfolgend anhand der Tabellen 1 bis 4 näher erläutert.

Die Tabellen 1 und 2 enthalten die genaue Bezeichnung der Komponenten sowie eine genaue Beschreibung der Zusammensetzung der eingesetzten Komponenten und die Angabe eines Herstellers. Tabelle 3 umfasst die erfindungsgemäßen Beispiele 1 bis 4 und die Tabelle 4 die Vergleichsbeispiele 5 bis 9.

**Tabelle 1**

| **Komponenten** | **Beschreibung** | **Handelsname** | **Hersteller** |
|---|---|---|---|
| PA 6I/6T (A) | amorphes Copolyamid 6I/6T aus Hexamethylendiamin, Isophthalsäure und Terephthalsäure mit Aminoendgruppenüberschuss RV 1,42 (gemessen in 0,5 Gew.-%-iger, m-Kresollösung bei. 20 °C) Glasübergangstemperatur 125 °C Aminoendgruppen 246 meq/kg | - | EMS-CHEMIE AG, Schweiz |
| PA 6I/6T (B) | amorphes Copolyamid 6I/6T aus Hexamethylendiamin, Isophthalsäure und Terephthalsäure mit Carboxylendgruppenüberschuss RV 1,52 (gemessen in 0,5 Gew.-%-iger m-Kresollösung bei 20 °C) Glasübergangstemperatur 125 °C Aminoendgruppen 35 meq/kg | - | EMS-CHEMIE AG, Schweiz |
| PA 6 | Polyamid 6 aus ε-Caprolactam RV 1,80 (gemessen in 0,5 Gew.-%-iger m-Kresollösung bei. 20 °C) | - | EMS-CHEMIE AG, Schweiz |
| PA 66 | Polyamid 66 aus Hexamethylendiamin und Adipinsäure RV 1,75 (gemessen in 0,5 Gew.-%-iger m-Kresollösung bei 20 °C) | Radipol A 45 | Radici Chimica, Italien |

| | | | |
|---|---|---|---|
| RV → relative Viskosität | | | |

**Tabelle 2**

| **Komponenten** | **Beschreibung** | **MVR 275 °C, 5 kg [ccm/10min]** | **Handelsname** | **Hersteller** |
|---|---|---|---|---|
| SEBS | Styrol-Ethylen/Butylen-Styrol-Blockcopolymer mit 29 Gew.-% Styrol, nicht funktionalisiert | 2 | Kraton G1650 ES | Kraton Performance Polymers Inc., |
| SEBS-MAH (C) | Funktionalisiertes Styrol-Ethylen/Butylen-Styrol-Blockcopolymer mit 30 Gew.-% Styrol 1,8 Gew.-% Maleinsäureanhydrid | 110 | Scona TSKD 9103 GCT | Kometra Kunststoff-Modifikatoren und -Additiv GmbH, Deutschland |
| SEBS-MAH (D) | Funktionalisiertes Styrol-Ethylen/Butylen-Styrol-Blockcopolymer mit 30 Gew-% Styrol 1,7 Gew.-% Maleinsäureanhydrid | 130 | Kraton FG1901X | Kraton Performance Polymers Inc., |
| GF-R (E) | Glasfasern, rund | - | EC 13 720 | Johns Manville, Slowakei |
| | 4,7 mm lang, Durchmesser 13 µm | | 4,7 mm | |
| GF-R (F) | Glasfasern, rund | - | 995 EC10-4.5 | Saint-Gobain Vetrotex, Frankreich |
| | 4,5 mm lang, Durchmesser 10 µm | | | |
| GF-F | Glasfasern, flach | - | NITTOBO CSG3PA-820 | Nitto Boseki Co., LTD., Japan |
| | 3 mm lang, Hauptquerschnittsachse 28 µm | | | |
| | Nebenquerschnittsachse 7 µm | | | |
| | Aspektverhältnis der Querschnittsachsen = 4 | | | |
| Ruß-Masterbatch | Farbruß-Masterbatch auf Polyethylenbasis mit 40 Gew.-% Farbruß | - | Euthylen Schwarz 00-6005 C4 | BASF Color Solutions, Deutschland |

**Tabelle 3**

| | | **Beispiele** | | | |
|---|---|---|---|---|---|
| **Komponenten** | **Einheit** | **1** | **2** | **3** | **4** |
| PA 6I/6T (A) | Gew. -% | 34,5 | 34,5 | 35 | 34,5 |
| SEBS | Gew. -% | 17,25 | 17,25 | 22 | 17,25 |
| SEBS-MAH (C) | Gew.-% | 17,25 | 17,25 | 22 | 17,25 |
| Ruß-Masterbatch | Gew.-% | 1 | 1 | 1 | 1 |
| GF-R (E) | Gew. -% | 30 | - | - | - |
| GF-R (F) | Gew. -% | - | 30 | 20 | - |
| GF- F | Gew. -% | - | - | - | 30 |

| **Tests** | | | | | |
|---|---|---|---|---|---|
| | | | | | |
| Zug-E-Modul | MPa | 5160 | 4880 | 3220 | 4630 |
| Reißdehnung | % | 7 | 9 | 12 | 7 |
| Schlagzähigkeit, (Charpy) 23 °C | kJ/m² | 66 | 74 | 72 | 70 |
| Kerbschlagzähigkeit, (Charpy) 23 °C | kJ/m² | 19 | 23 | 30 | 35 |
| Oberflächenqualität | - | 4 | 4 | 4 | 5 |
| Soft Touch | - | 4 | 4 | 5 | 4 |

| | | | | | |
|---|---|---|---|---|---|
| (A) → Oberschuss Aminoendgruppen Bewertung Oberflächenqualität bzw. Soft Touch von 1 sehr schlecht bis 5 sehr gut | | | | | |

**Tabelle 4**

| | | **Vergleichsbeispiele** | | | | |
|---|---|---|---|---|---|---|
| **Komponenten** | **Einheit** | **5** | **6** | **7** | **8** | **9** |
| PA 6I/6T (B) | Gew.-% | 38,9 | - | - | - | - |
| PA 6 | Gew.-% | - | 34,5 | - | 9,7 | 23,3 |
| PA 66 | Gew.-% | - | - | 34,5 | - | - |
| SEBS | Gew.-% | 17,25 | 17,25 | 17,25 | 41,00 | - |
| SEBS-MAH (C) | Gew.-% | 17,25 | 17,25 | 17,25 | - | - |
| SEBS-MAH (D) | Gew.-% | - | - | - | 19,30 | 46,70 |
| Ruß-Masterbatch | Gew.-% | 1 | 1 | 1 | - | - |
| GF-R (E) | Gew.-% | 30 | - | - | - | - |
| GF-R (F) | Gew.-% | - | 30 | 30 | 30 | 30 |

| **Tests** | | | | | | |
|---|---|---|---|---|---|---|
| | | | | | | |
| Zug-E-Modul | MPa | 4180 | 4870 | 3810 | 790 | 1050 |
| Reißdehnung | % | 4 | 5 | 5 | 29 | 23 |
| Schlagzähigkeit, (Charpy) 23 °C | kJ/m² | 46 | 67 | 50 | kB | kB |
| Kerbschlagzähigkeit, (Charpy) 23 °C | kJ/m² | 10 | 31 | 30 | kB | kB |
| Oberflächenqualität | - | 2 | 3 | 2 | 2 | 2 |
| Soft Touch | - | 4 | 3 | 2 | 2 | 2 |

| | | | | | | |
|---|---|---|---|---|---|---|
| (B) → Oberschuss Carboxylgruppen kB → kein Bruch Bewertung Oberflächenqualität bzw. Soft Touch von 1 sehr schlecht bis 5 sehr gut | | | | | | |

Wie aus Tabelle 3 hervorgeht, weisen die mit den erfindungsgemäßen Polyamidformmassen hergestellten Prüfkörper nach den Beispielen 1 bis 4 jeweils für sich gesehen überlegene Eigenschaften in Bezug auf den Zug-E-Modul in Kombination mit einer überlegenen Reißdehnung auf. Wesentlich bei den Prüfkörpern, die mit einer erfindungsgemäßen Polyamidformmasse hergestellt worden sind, ist, dass alle Prüfkörper eine überdurchschnittliche Oberflächenqualität und einen ausgezeichneten Soft Touch aufweisen. In der Tabelle 3 ist dabei der Soft Touch qualitativ ermittelt und innerhalb einer Skala von 1 bis 5 bewertet worden. Wie aus Tabelle 3 hervorgeht, weisen die Prüfkörper, die mit der erfindungsgemäßen Formmasse hergestellt worden sind, in Bezug auf die Oberflächenqualität und den Soft Touch überlegene Eigenschaften auf. Alle Oberflächen sind mit 4 bzw. 5 bezeichnet worden. Es ist besonders hervorzuheben, dass trotz der sehr guten Oberflächenqualität und Soft Touch eine überdurchschnittlich gute Reißdehnung in Kombination mit einem hohen Zug-E-Modul erreicht wurden. Die Prüfkörper, die mit der erfindungsgemäßen Polyamidformmasse hergestellt worden sind, zeichnen sich somit nicht nur durch gute physikalische Eigenschaften, d.h. durch einen hohen Zug-E-Modul und eine hohe Reißdehnung aus, sondern weisen gleichzeitig auch noch die geforderten Oberflächenqualitäten und den Soft Touch auf.

Wie aus den Vergleichsbeispielen (Tabelle 4) hervorgeht, weisen zwar dort die mit 8 und 9 bezeichneten Vergleichsbeispiele (vgl. Beispiel III bzw. IV der EP 0 771 846 B1) eine sehr hohe Reißdehnung auf (29 bzw. 23 %), jedoch zeigen dann diese Prüfkörper einen Zug-E-Modul, der lediglich im Bereich von 790 bzw. 1050 MPa liegt. Auch ist die Oberflächenqualität bzw. der Soft Touch deutlich schlechter (nämlich 2) als bei den erfindungsgemäßen Prüfkörpern. Die weiteren Vergleichsbeispiele, die mit 5 bis 7 bezeichnet worden sind, unterscheiden sich ebenfalls von den erfindungsgemäßen Prüfkörpern dadurch, dass ihre Reißdehnung deutlich schlechter ist, nämlich jeweils maximal 5 %, und dass auch diese Prüfkörper in Bezug auf ihre Oberflächenqualität und den Soft Touch nur unbefriedigende Ergebnisse zeigen.

Wie aus den Vergleichsbeispielen und den erfindungsgemäßen Beispielen hervorgeht, zeichnen sich somit die Formkörper der Erfindung, die mit einer erfindungsgemäßen Polyamidformmasse hergestellt worden sind, durch ausgezeichnete physikalische Eigenschaften in Kombination mit guten Oberflächenqualitäten aus.

## Patentansprüche

1. Polyamidformmasse zur Herstellung von Formkörpern mit einer Weichgriffoberfläche enthaltend
1. 55 bis 85 Gew.-% eines Blends aus mindestens einem Polyamid (PA) mit mindestens einem Styrolblockcopolymer als Weichmacher, wobei
1.1. das Polyamid ein amorphes Polyamid ist, welches aminterminiert ist, und
1.2. der mindestens eine Weichmacher mindestens ein Styrol-Ethylen/Butylen-Styrolcopolymer (SEBS) und mindestens ein mit Maleinsäureanhydrid (MAH) gepfropftes SEBS (SEBS-MAH) enthält und
1.3. das Gewichtsverhältnis von Polyamid zu Weichmacher im Bereich von 1,25:0,75 bis 0,75:1,25, liegt,
2. 15 bis 45 Gew.-% eines Verstärkungsstoffes und
3. 0,1 bis 10 Gew.-% eines Additivs, wobei die Summe der Bestandteile 1+2+3 100 Gew.-% ergibt.

2. PA-Formmasse nach Anspruch 1, **dadurch gekennzeichnet, dass** das Gewichtsverhältnis (1.3.) von Polyamid zu Weichmacher 1,2:0,8 bis 0,8:1,25, bevorzugt 1,15:0,85 bis 0,85:1,15 und besonders bevorzugt 1:1 ist.

3. PA-Formmasse nach Anspruch 1 oder 2, **dadurch gekennzeichnet, dass** das Gewichtsverhältnis (1.2.) von SEBS zu SEBS-MAH 1:2 bis 2:1, bevorzugt 1:1,5 bis 1,5:1, besonders bevorzugt 1:1,2 bis 1,2:1, und ganz besonders bevorzugt 1:1 ist.

4. PA-Formmasse nach mindestens einem der Ansprüche 1 bis 3, **dadurch gekennzeichnet, dass** der Verstärkungsstoff in einer Menge von 20 bis 40 Gew.-%, bevorzugt 25 bis 35 Gew.-% und besonders bevorzugt in einer Menge von 30 Gew.-% enthalten ist.

5. PA-Formmasse nach einem der Ansprüche 1 bis 4, **dadurch gekennzeichnet, dass** das amorphe Polyamid aminterminiert ist und einen Gehalt an Aminoendgruppen von mindestens 150 meq/kg aufweist.

6. PA-Formmasse nach einem der Ansprüche 1 bis 5, **dadurch gekennzeichnet, dass** das amorphe Polyamid ausgewählt ist aus der Gruppe bestehend aus PA 6I/6T, PA 6I/10T, PA MACM14, PA MACM18 und Mischungen oder Copolyamiden davon.

7. PA-Formmasse nach mindestens einem der Ansprüche 1 bis 6, **dadurch gekennzeichnet, dass** die Verstärkungsstoffe Glasfasern sind.

8. PA-Formmasse nach Anspruch 7, **dadurch gekennzeichnet, dass** die Glasfasern einen runden und/oder nichtkreisförmigen Querschnitt aufweisen.

9. PA-Formmasse nach mindestens einem der Ansprüche 1 bis 8, **dadurch gekennzeichnet, dass** die Additive ausgewählt sind aus anorganischen Stabilisatoren, organischen Stabilisatoren, Gleitmitteln, Farbstoffen, Markierungsstoffen, anorganischen Pigmenten, organischen Pigmenten, IR-Absorbern, Antistatika, Antiblockmitteln, Nukleierungsmitteln, Kristallisationsbeschleunigern, Kristallisationsverzögerern, Kondensationskatalysatoren, Kettenreglern, Entschäumern, kettenverlängernden Additiven, Leitfähigkeitsadditiven, Ruß, Graphit, Kohlenstoffnanoröhrchen, Entformungsmitteln, Trennmitteln, optischen Aufhellern, Haftvermittlern, metallischen Pigmenten, Metallflittern, metallbeschichteten Partikeln, teilchenförmigen Füllstoffen, nanoskaligen Füllstoffen, natürlichen Phyllosilikaten, synthetischen Phyllosilikaten oder Mischungen davon.

10. PA-Formmasse nach Anspruch 9, **dadurch gekennzeichnet, dass** der Farbstoff Ruß ist.

11. PA-Formmasse nach mindestens einem der Ansprüche 1 bis 10, **dadurch gekennzeichnet, dass** daraus hergestellte Prüfkörper einen Zug-E-Modul gemessen nach ISO 527 von größer 2500 MPa und gleichzeitig eine Reißdehnung nach ISO 527 von größer 6 % aufweisen.

12. Formkörper mit einer Weichgriffoberfläche herstellbar aus einer PA-Formmasse nach mindestens einem der Ansprüche 1 bis 10.

13. Formkörper nach Anspruch 11, **dadurch gekennzeichnet, dass** der Formkörper ausgewählt ist aus Gehäusen, Tasten, Griffen und/oder Griffflächen für Handwerkzeuge, Haushaltsgeräte, Sportgeräte, Möbelbestandteile, elektrische bzw. elektronische Komponenten oder elektrische bzw. elektronische Geräte.

14. Verwendung einer Polyamidformmasse nach mindestens einem der Ansprüche 1 bis 10 zur Herstellung von Formkörpern mit einer Weichgriffoberfläche.

## Claims

1. Polyamide moulding compound for producing moulded articles with a soft-touch surface comprising
1. 55 to 85% by weight of a blend of at least one polyamide (PA) with at least one styrene block copolymer as plasticiser,
1.1 the polyamide being an amorphous polyamide which is amine-terminated, and
1.2. the at least one plasticiser comprising at least one styrene-ethylene/butylene-styrene copolymer (SEBS) and at least one (SEBS) grafted with maleic anhydride (SEBS-MAH) and
1.3 the weight ratio of polyamide to plasticiser being in the range of 1,25 : 0,75 to 0,75 : 1,25,
2. 15 to 45% by weight of a reinforcing material and
3. 0.1 to 10% by weight of an additive, the sum of the components 1+2+3 producing 100% by weight.

2. PA moulding compound according to claim 1, **characterised in that** the weight ratio (1.3.) of polyamide to plasticiser is 1,2 : 0,8 to 0,8 : 1,25, preferably 1,15 : 0,85 to 0,85 : 1,15 and particularly preferred 1 : 1.

3. PA moulding compound according to claim 1 or 2, **characterised in that** the weight ratio (1.2.) of SEBS to SEBS-MAH is 1 : 2 to 2 : 1, preferably 1 : 1.5 to 1.5 : 1, particularly preferred 1 : 1.2 to 1.2 : 1 and very particularly preferred 1 : 1.

4. PA moulding compound according to at least one of the claims 1 to 3, **characterised in that** the reinforcing material is contained in a quantity of 20 to 40% by weight, preferably 25 to 35% by weight and particularly preferred in a quantity of 30% by weight.

5. PA moulding compound according to one of the claims 1 to 4, **characterised in that** the amorphous polyamide is amine-terminated and has a content of amino end-groups of at least 150 meq/kg.

6. PA moulding compound according to one of the claims 1 to 5, **characterised in that** the amorphous polyamide is selected from the group consisting of PA 6I/6T, PA 6I/10T, PA MACM14, PA MACM18 and mixtures or copolyamides thereof.

7. PA moulding compound according to at least one of the claims 1 to 6, **characterised in that** the reinforcing materials are glass fibres.

8. PA moulding compound according to claim 7, **characterised in that** the glass fibres have a round and/or a non-circular cross-section.

9. PA moulding compound according to at least one of the claims 1 to 8, **characterised in that** the additives are selected from inorganic stabilisers, organic stabilisers, lubricants, colourants, marking materials, inorganic pigments, organic pigments, IR-absorbers, antistatic agents, antiblocking agents, nucleation agents, crystallisation accelerators, crystallisation inhibitors, condensation catalysts, chain controllers, defoamers, chain-lengthening additives, conductivity additives, carbon black, graphite, carbon nanotubes, mould-release agents, parting agents, optical brighteners, adhesives, metal pigments, metal flakes, metal-coated particles, particle fillers, nanoscale fillers, natural phyllosilicates, synthetic phyllosilicates or mixtures thereof.

10. PA moulding compound according to claim 9, **characterised in that** the colourant is carbon black.

11. PA moulding compound according to at least one of the claims 1 to 10, **characterised in that** moulded articles produced therefrom have a modulus of elasticity in tension, measured according to ISO 527, of greater than 2500 MPa and at the same time a breaking elongation according to ISO 527 of greater than 6%.

12. Moulded article with a soft-touch surface producible from a PA moulding compound according to at least one of the claims 1 to 10.

13. Moulded article according to claim 11, **characterised in that** the moulded article is selected from housings, keys, grips and/or gripping surfaces for hand tools, household equipment, sports equipment, furniture components, electrical or electronic components or electrical or electronic devices.

14. Use of a polyamide moulding compound according to at least one of the claims 1 to 10 for producing moulded articles with a soft touch surface.

## Revendications

1. Matière à mouler en polyamide pour la fabrication de corps moulés dotés d'une surface de prise souple, contenant
1. 55 à 85 % en poids d'un blend composé d'au moins un polyamide (PA) avec au moins un copolymère en masse de styrène comme plastifiant, sachant que
1.1. le polyamide est un polyamide amorphe, à terminaison amine, et que
1.2. l'au moins un plastifiant contient au moins un copolymère styrène-éthylène/butylène-styrène (SEBS) et au moins un SEBS greffé avec de l'anhydride maléique (MAH), et que
1.3. le rapport en poids du polyamide au plastifiant va de 1,25/0,75 à 0,75/1,25,
2. 15 à 45 % en poids d'une matière de renforcement et
3. 0,1 à 10 % en poids d'un additif, la somme des composants 1+2+3 donnant 100 % en poids.

2. Matière à mouler en PA selon la revendication 1, **caractérisée en ce que** le rapport en poids (1.3.) du polyamide au plastifiant va de 1,2/0,8 à 0,8/1,25, de préférence de 1,15/0,85 à 0,85/1,15, et de façon particulièrement préférée est de 1/1.

3. Masse à mouler en PA selon la revendication 1 ou 2, **caractérisée en ce que** le rapport en poids (1.2.) du SEBS au SEBS-MAH va de 1/2 à 2/1, de préférence de 1/1,5 à 1,5/1, de façon particulièrement préférée de 1/1,2 à 1,2/1 et de manière tout particulièrement préférée est de 1/1.

4. Matière à mouler en PA selon au moins l'une des revendications 1 à 3, **caractérisée en ce que** la matière de renforcement est contenu en une quantité de 20 à 40 % en poids, de préférence de 25 à 35 % en poids et de façon particulièrement préférée en une quantité de 30 % en poids.

5. Matière à mouler en PA selon au moins l'une des revendications 1 à 4, **caractérisée en ce que** le polyamide amorphe à terminaison amine présente une teneur en groupement amine de fin de chaîne d'au moins 150 meq/kg.

6. Matière à mouler en PA selon au moins l'une des revendications 1 à 5, **caractérisée en ce que** le polyamide amorphe est choisi parmi le groupe comprenant du PA 6I/6T, du PA 6I/10T, du PA MACM 14, du PA MACM 18 et de mélanges ou de copolyamides de ceux-ci.

7. Matière à mouler en PA selon au moins l'une des revendications 1 à 6, **caractérisée en ce que** les matières de renforcement sont des fibres de verre.

8. Matière à mouler en PA selon la revendication 7, **caractérisée en ce que** les fibres de verre présentent une section ronde et/ou non circulaire.

9. Matière à mouler en PA selon au moins l'une des revendications 1 à 8, **caractérisée en ce que** les additifs sont choisis parmi des stabilisateurs inorganiques, des stabilisateurs organiques, des lubrifiants, des colorants, des substances de marquage, des pigments inorganiques, des pigments organiques, des absorbeurs d'IR, des antistatiques, des antiadhésifs, des agents de nucléation, des accélérateurs de cristallisation, des ralentisseurs de cristallisation, des catalyseurs de condensation, des régulateurs de chaîne, des antimousses, des additifs prolongateurs de chaîne, des additifs de conductivité, du noir de carbone, du graphite, des nanotubes de carbone, des agents de démoulage, des agents de séparation, des agents de blanchiment optique, des promoteurs d'adhérence, des pigments métalliques, des paillettes métalliques, des particules métallisées, des charges de forme particulaire, des charges nanoscopiques, des phyllosilicates naturels, des phyllosilicates synthétiques ou des mélanges de ceux-ci.

10. Matière à mouler en PA selon la revendication 9, **caractérisée en ce que** le colorant est du noir de carbone.

11. Matière à mouler en PA selon au moins l'une des revendications 1 à 10, **caractérisée en ce que** des éprouvettes fabriquées à partir de celle-ci présentent un module d'élasticité à la traction, mesuré selon ISO 527, supérieur à 2500 MPa et en même temps un allongement à la rupture selon ISO 527 supérieur à 6 %.

12. Corps moulé dotés d'une surface de prise souple pouvant être fabriqué à partir d'une matière à mouler en PA selon au moins l'une des revendications 1 à 10.

13. Corps moulé selon la revendication 11, **caractérisé en ce que** le corps moulé est choisi parmi des boîtiers, des touches, des poignées et/ou des surfaces de prise pour des outils, des appareils ménagers, des appareils de sport, des éléments de meubles, des composants électriques, respectivement électroniques, ou des appareils électriques, respectivement électroniques.

14. Utilisation d'une matière à mouler en polyamide selon au moins l'une des revendications 1 à 10 pour la fabrication de corps moulés dotés d'une surface de prise souple.
